# EUROPEAN PATENT APPLICATION

(11) **EP 1 107 633 A1**
(43) Date of publication of application: **13.06.2001**
(21) Application number: 00309325.9
(22) Date of filing: 23.10.2000
(51) Int. Cl.: H04Q 7/38

(54) **Mobile radio telecommunications system with improved hard handover**

(30) Priority: 10.12.1999 EP 99309987
(71) Applicant: LUCENT TECHNOLOGIES INC., Murray Hill, New Jersey 07974-0636 (US)
(72) Inventor: Costa, Mauro, Casteggio 27045 (Pavia) (IT); Michael, Roberts, Southend on Sea SS2 5EB (GB); Sivagnanasundaram, Sutha, London SW17 4EJ (GB)
(74) Representative: Buckley, Christopher Simon Thirsk

(57) **Abstract**

In the UMTS, handover of a mobile from a serving RNC 52 to a target RNC 54 is achieved by the TRNC 54 sending a handover command signal directly to the SRNC 52 through a Iur link 50. The link may be pre-existing or the TRNC may send a request and a protocol to set up such a link. The core network is no longer involved in handover, and a considerable time saving is achieved.

## Description

This invention relates to a mobile radio telecommunications system, such as the Universal Mobile Telephone System or the Global System for Mobile Communications. In such systems, as a mobile user moves with respect to the ground, handover from one network controller to another is a frequent requirement. Such handovers are controlled by the core network, and delays of several seconds are often experienced. There is a risk of an increase in interference; of a decrease in Quality of Service; and of a decrease in radio efficiency due to these delays. It is not possible to provide lossless handover or relocation for services.

In this specification the terms "handover" and "relocation" are used interchangeably to mean the handover of control of a connection from a serving Radio Network Controller (RNC) to a target RNC.

It is an object of the invention to provide a method of hard handover which is faster than is currently possible.

According to the invention, in a mobile radio telecommunications system, a method of handing over control of a mobile system from a serving controller to a target controller in which the target controller sends a handover command signal to the mobile system through the serving controller, characterized in that the handover command signal is sent directly from the target controller to the serving controller without passage through a core network..

Also according to the invention a controller for a packet switched mobile radio telecommunications system characterized by being arranged so that, on receipt from a core network of the system of a handover required message related to a mobile system, the controller sends to the controller currently serving the mobile system a request for a direct link.

The invention will now be described by way of example only with reference to the accompanying drawings in which :-
Figure 1 illustrates schematically a part of the Universal Mobile Telephone System (UMTS);
Figures 2a and 2b illustrate two signaling paths in the currently used handover method; and
Figure 3 illustrates the signaling path according to the invention.

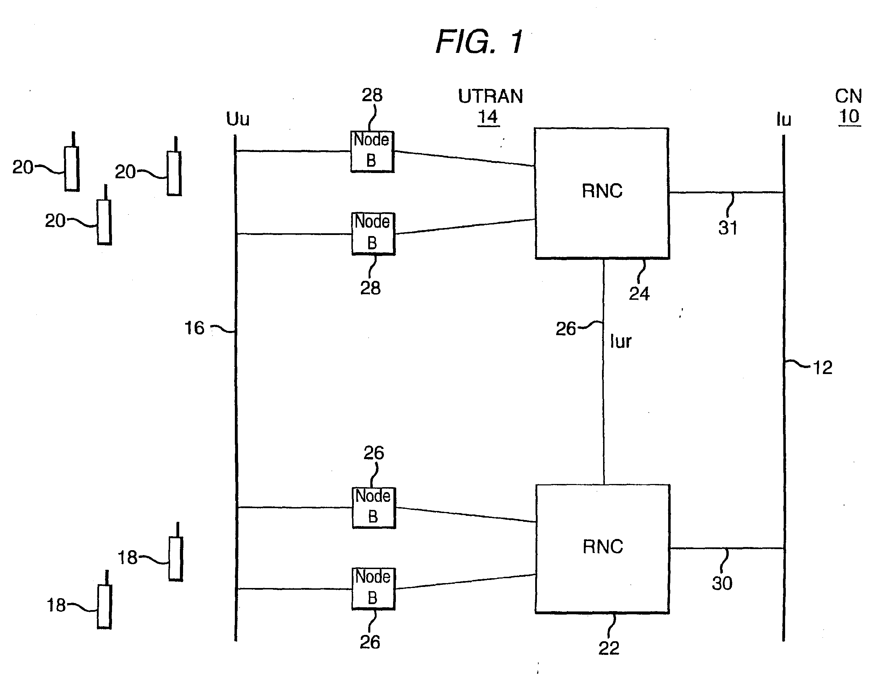

In Figure 1, a Core Network (CN) 10 has an interface 12, the Iu interface, to the UMTS Terrestrial Radio Access Network (UTRAN) 14, and the UTRAN 14 has an interface 16, the Uu interface, to a number of Mobile Systems (MSs) 18, 20.

Within the UTRAN 14 are a number of Radio Network Controllers (RNC) 22, 24, two only being illustrated, each RNC controlling a number of Node Bs 26, 28, two only being shown for each RNC. RNC 22 controls the MSs 18 and RNC 24 controls the MSs 20. The RNCs 22, 24 are connected to each other by an interface Iur 26 and to the Core Network 10 by Iu interfaces 30,31.

In the Figure, the network is the UMTS network; in a GSM network the equivalent building block to an RNC is termed a Base Station Controller (BSC); a Node B is termed a Base Transceiver Station (BTS); and the Uu interface is termed the radio interface.

The RMCs 22, 24 build frames containing data, send the frames to a Node B 26, 28 and control a mobile system as it moves over the ground. A Node B receives frames from an RNC, and modulates the data for passage to the radio interface Uu 16 and thence to a mobile.

The UMTS is arranged to have a control plane and a user plane; the control plane is arranged to control signalling between Node Bs and RNCs, to control the allocation of requests for resources, and to control handover requests. The user plane is responsible for handling the actual data.

Suppose a MS 30 is moving (upwards in the Figure) from a telecommunications cell controlled by Node B 26 associated with serving RNC 22 to a cell controlled by Node B 28 associated with target RNC 24. When resources have been allocated to the TRNC 24, it sends information on how the MS 30 must reconnect, or to tell the MS 30 that it has been reconnected.

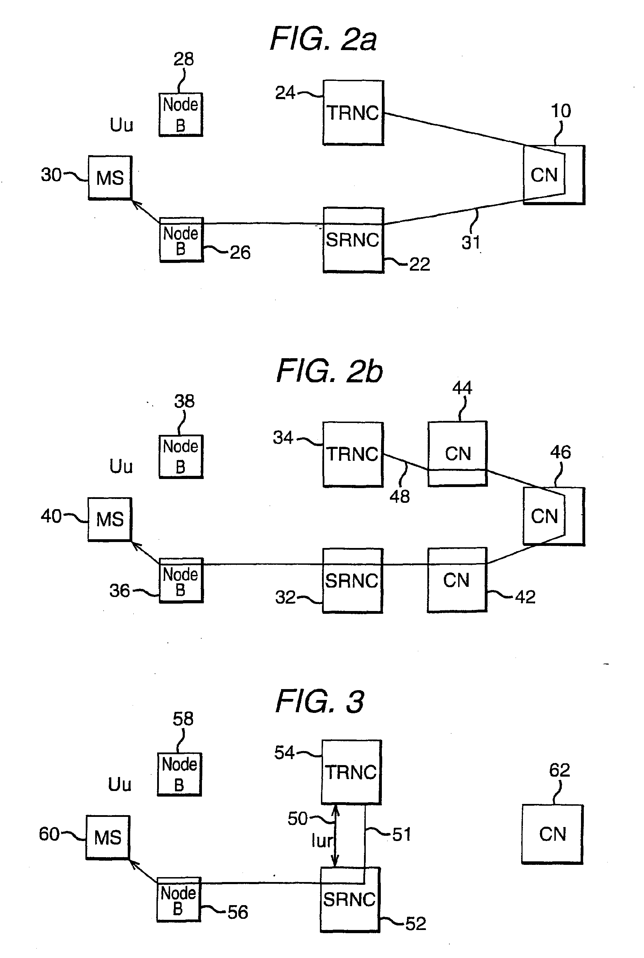

Referring to Figure 2a, the normal route for handover signalling is from the TRNC 24 through the CN 10 to the SRNC 22, and through the Node B 26 to the MS 30. The signalling route is indicated by the full line 31.

Figure 2b shows a worst case signalling in the currently known arrangements; the TRNC 34 and SRNC 32 are controlled by different core networks 44, 42, which can communicate only through a third core network 46. The handover signalling route 48 now passes from TRNC 34 to CN 44, then to CN 46 and CN 42 to SRNC 32, then to Node B 36 and MS 40.

Each hop of the signalling route between RNCs and CNs to the next can take one or two seconds, so the total delay in handover can be as long as 8 seconds. The handover signalling is conventionally out-of-band. Both signalling information and user plane information is transmitted.

Figure 3 shows the handover signalling route according to the invention. If a Iur link 50 already exists between the target and serving RNCs 52, 54, it is utilised; if no such link exists, the TRNC 54 sends a command and a protocol is set up to allow information to pass directly between the TRNC 54 and the SRNC 52, reference 51.

In the method according to the invention, the TRNC 54 sends the handover command to the SRNC 52 over the Iur link 50 between the RNCs, and the SRNC 52 routes the handover command to Node B 56 and MS 60. It will be clear that the CN 62 is no longer involved in the hard handover, and there is a substantial saving in time.

With a shorter handover time achieved by use of the invention, the risk of interference is reduced; Quality of Service is increased; and radio efficiency is increased.

The invention has been described with reference to the UMTS, it can also be applied in GSM if an Iur interface exists in the system.

## Claims

1. In a mobile radio telecommunications system, a method of handing over control of a mobile system (60) from a serving controller (52) to a target controller (54) in which the target controller (54) sends a handover command signal to the mobile system (60) through the serving controller (52), characterized in that the handover command signal is sent directly from the target controller to the serving controller without passage through a core network (62).

2. A method according to Claim 1 in which the target controller (54) sends said signal to the serving controller (52) over an existing Iur link (50) between the controllers.

3. A method according to Claim 1 in which the target controller (54) sends a command and a protocol to the serving controller (52) so as to set up an Iur link (50) between the two controllers.

4. A method according to any preceding claim applied in the Universal Mobile Telephone System.

5. A method according to Claim 1 or Claim 2 applied in the Global System for Mobile Communications.

6. A controller (54) for a mobile telecommunications system which, on taking control of a mobile system (60) is characterised by being arranged to send a handover command signal to said mobile system directly through a serving controller (52) without passage through a core network.

7. A controller (54) according to Claim 6 arranged to send said handover command signal over an existing Iur link (50) with said serving controller (52).

8. A controller (54) according to Claim 6 arranged to send a command a protocol to said serving controller (52) so as to set up an Iur link between the controllers.

9. A controller according to any one of claims 6, 7 or 8 which is a radio network controller (52, 54) for a Universal Mobile Telephone System network.

10. A controller according to any one of claims 6, 7 or 8 which is a Base Station Controller for a Global System for Mobile Telecommunications network.
